Europäisches Patentamt

European Patent Office

Office européen des brevets

(11) Veröffentlichungsnummer: **0 333 993 B1**

(12) **EUROPÄISCHE PATENTSCHRIFT**

(45) Veröffentlichungstag der Patentschrift: **02.12.92**

(51) Int. Cl.⁵: **B60J 1/10**

(21) Anmeldenummer: **89101182.7**

(22) Anmeldetag: **24.01.89**

(54) Feststehende Fensteranordnung an einer Kraftfahrzeugtür.

(30) Priorität: **25.03.88 DE 3810146**

(43) Veröffentlichungstag der Anmeldung:
**27.09.89 Patentblatt 89/39**

(45) Bekanntmachung des Hinweises auf die
Patenterteilung:
**02.12.92 Patentblatt 92/49**

(84) Benannte Vertragsstaaten:
**DE ES FR GB IT**

(56) Entgegenhaltungen:
**DE-A- 3 718 876**
**GB-A- 2 115 049**
**US-A- 4 723 809**

(73) Patentinhaber: **Dr.Ing.h.c. F. Porsche Aktiengesellschaft
Porschestrasse 42
W-7000 Stuttgart 40(DE)**

(72) Erfinder: **Braun, Walter, Dipl.-Ing.
Malmsheimer Strasse 2
W-7032 Sindelfingen(DE)**
Erfinder: **Gutzeit, Horst, Dipl.-Ing.
Brahmsstrasse 5
W-7135 Wiernsheim(DE)**
Erfinder: **Handte, Horst
Rosenstrasse 15
W-7251 Heimsheim(DE)**
Erfinder: **Ziegler, Hermann
Blumenstrasse 19
W-7253 Renningen(DE)**

EP 0 333 993 B1

## Beschreibung

Die Erfindung bezieht sich auf eine feststehende Fensteranordnung an einer Kraftfahrzeugtür, insbesondere Dreiecksfenster, das unter Zwischenschaltung einer Dichtung mit einem aufrecht verlaufenden Haltesteg verbunden ist, wobei am unteren Randbereich des Fensters ferner eine Halteschiene angebracht ist.

Eine feststehende Fensteranordnung der eingangs genannten Gattung ist aus der am 22-12-88 veröffentlichten deutschen Patentanmeldung DE-A-37 18 876.3 bekannt Internen Stand der Technik. Bei dieser Ausbildung wird zunächst die Halteschiene mit dem Fenster verbunden, bevor in einem nachfolgenden Arbeitsgang das Fenster in die in den Haltesteg eingesetzte Dichtung eingeführt wird. Außerdem muß die Dichtung zusätzlich durch Kleben am Haltesteg befestigt werden.

Eine derartige Fensteranordnung ist hinsichtlich der Montage kostenaufwendig, da mehrere Arbeitsgänge zu ihrer Herstellung erforderlich sind. Um einen ausreichenden Halt der Scheibe am Haltesteg zu erreichen, muß an der Scheibe zusätzlich ein Halter angeordnet werden, der dann mit dem Haltesteg verschraubt wird.

Aufgabe der Erfindung ist es, den Kostenaufwand für eine feststehende Fensteranordnung zu reduzieren und außerdem bei einfachem Aufbau eine gute Fixierung des Fensters am Haltesteg zu erzielen.

Erfindungsgemäß wird diese Aufgabe durch die kennzeichnenden Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die aus Fenster, Halteschiene, Dichtung, Haltesteg und oberem Endstück bestehende, in einem einzigen Arbeitsgang vorgefertigte, einbaufertige Einheit der Kostenaufwand wesentlich reduziert wird. Ferner wird durch das unmittelbare Anspritzen eines Endstückes auf den oberen Endbereich des Haltesteges eine gute Befestigung des Endstückes erzielt. Durch die innige Verbindung der Dichtung mit dem Fensterrand und dem Haltesteg wird ein sicherer Halt des Fensters am Haltesteg gewährleistet, wobei auf einen zusätzlichen Halter zur Befestigung der Scheibe verzichtet werden kann.

Ein Ausführungsbeispiel der Erfindung ist in der Zeichnung dargestellt und wird nachstehend näher erläutert.
Es zeigt

Fig. 1    eine Seitenansicht auf eine feststehende Fensteranordnung,

Fig. 2    eine Ansicht in Pfeilrichtung A der Fig. 1,

Fig. 3    einen Schnitt nach der Linie III-III der Fig. 1 in größerem Maßstab,

Fig. 4    einen Schnitt nach der Linie IV-IV der Fig. 2 in größerem Maßstab.

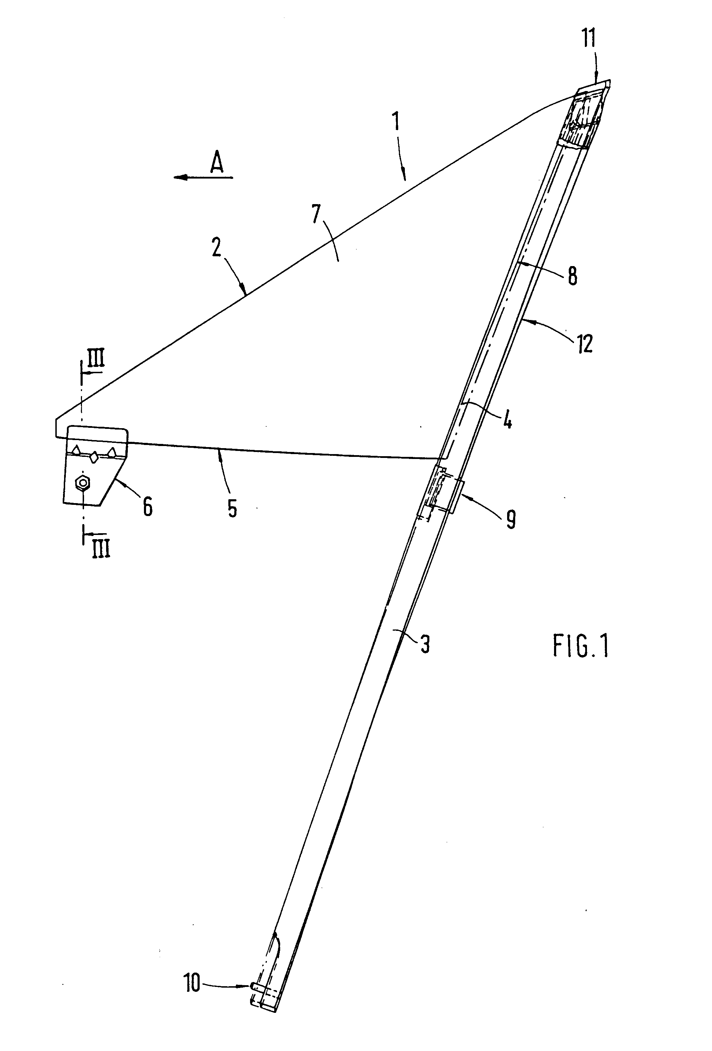

Fig. 1 zeigt eine feststehende Fensteranordnung 1 für eine nicht näher dargestellte Kraftfahrzeugtür, die sich aus einem Fenster 2, einem aufrecht verlaufenden Haltesteg 3, einer Dichtung 4 und einer am unteren Randbereich 5 des Fensters 2 angebrachten Halteschiene 6 zusammensetzt. Gemäß Fig. 1 wird das Fenster 2 durch ein Dreiecksfenster 7 gebildet, das lediglich an seinem in Fahrtrichtung A gesehen hintenliegenden, schrägverlaufenden Randbereich 8 mit dem Haltesteg 3 zusammenwirkt. Der Haltesteg 3 ist in nicht näher dargestellter Weise bei 9 und 10 mit dem Türkörper verschraubt.

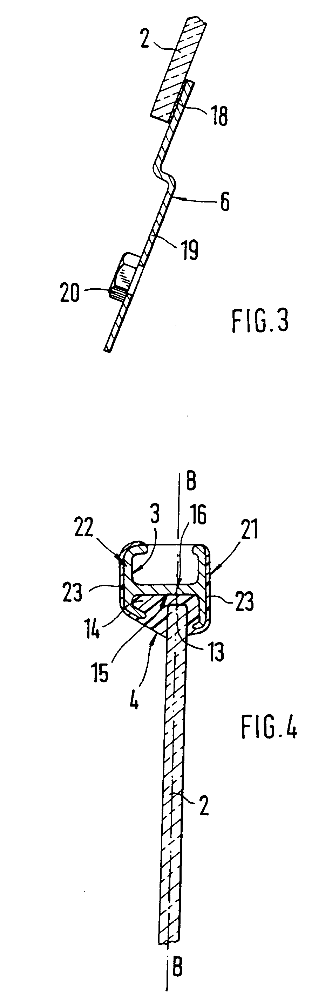

Eine kostengünstige Herstellung der Fensteranordnung 1 wird dadurch erreicht, daß das Fenster 2, die Halteschiene 6, die Dichtung 4, der Haltesteg 3 und ein oberes Endstück 11 für den Haltesteg 3 zu einer einbaufertigen Einheit 12 vorgefertigt sind, die in einem einzigen Arbeitsgang hergestellt wird. Die Dichtung 4 wird durch Umspritzen des Fensterrandes 13 mit einer elastischen, festhaftenden Schicht 14 aus Gummi, thermoplastischem oder duroplastischem Werkstoff gebildet, wobei diese fließfähige Schicht 14 den Hohlraum 15 zwischen dem Fensterrand 13 und einer Aufnahme 16 des Haltesteges 3 ausfüllt. Die beispielsweise aus PVC bestehende Schicht 14 wird flüssig in den Hohlraum 15 eingebracht und härtet danach aus, so daß ein Anvulkanisieren der Schicht 14 an das Fensters 2 und den Haltesteg 3 erzielt wird (Fig. 4).

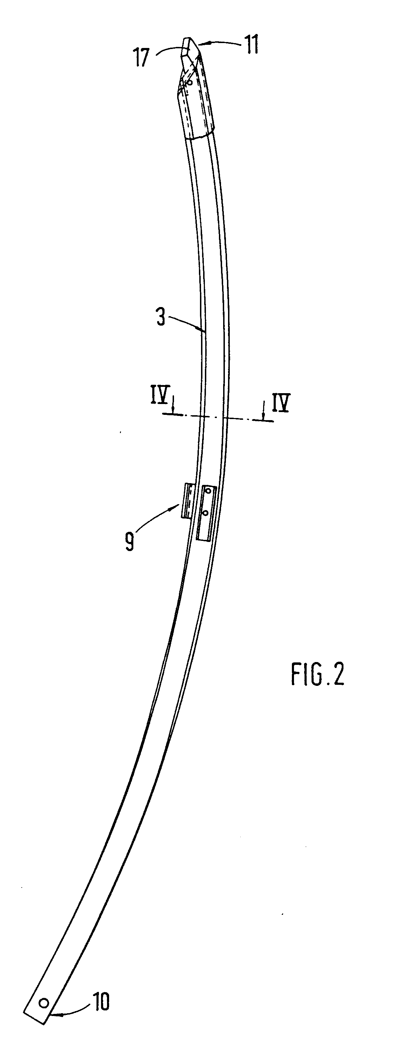

Ferner wird zusammen mit der Dichtung 4 das obere Endstück 11 mit angespritzt, das einen oberen Endbereich des Haltesteges 3 abdeckt und eine Dichtlippe 17 aufweist (Fig. 2). Das obere Endstück 11 besteht aus demselben Werkstoff wie die Dichtung 4. Die im unteren Bereich des Fensters 2 liegende Halteschiene 6 wird in einem Arbeitsgang mit der Dichtung 4 an das Fenster 2 angespritzt, wobei als haftende Schicht 18 ebenfalls Gummi oder PVC verwendet wird. Die Halteschiene 6 wird durch ein abgewinkeltes Blechteil 19 gebildet, das das Fenster 2 abschnittsweise nach unten hin überragt. Ferner ist an der Halteschiene 6 eine Schweißmutter 20 zum Befestigen der Fensteranordnung 1 vorgesehen.

Gemäß Fig. 4 sind die beiden, abschnittsweise etwa parallel zur Fensterebene B-B verlaufenden Außenseiten 21, 22 des Haltesteges 3 mit einer dünnen Bezugsschicht 23 versehen, wobei die Bezugsschicht 23 einstückig mit der Dichtung 4 ausgebildet ist und aus demselben Material besteht wie die Dichtung 4. Die Bezugsschicht 23 für den Haltesteg 3 kann jedoch auch vorher aufgebracht werden und aus einem anderen Material bestehen als die Schicht 14. Bei der Fertigung der Fensteranordnung 1 ist das Fenster 2, die Halteschiene 6 und der Haltesteg 3 in ein Spritzwerkzeug eingelegt. Anschließend wird in einem einzigen Arbeitsgang die Dichtung 4 mit dem oberen Endstück 11 und die Halteschiene 6 angespritzt.

## Patentansprüche

1. Feststehende Fensteranordnung an einer Kraftfahrzeugtür (2), insbesondere Dreiecksfenster (7), das unter Zwischenschaltung einer Dichtung (4) mit einem aufrecht verlaufenden Haltesteg (3) verbunden ist, wobei am unteren Randbereich (5) des Fensters (2) ferner eine Halteschiene (6) angebracht ist, dadurch gekennzeichnet, daß das Fenster (2), die Halteschiene (6), die Dichtung (4), der Haltesteg (3) und ein oberes Endstück (11) für den Haltesteg (3) zu einer einbaufertigen Einheit (12) vorgefertigt sind, die in einem einzigen Arbeitsgang hergestellt wird.

2. Feststehende Fensteranordnung nach Anspruch 1, dadurch gekennzeichnet, daß die Dichtung (4) durch Umspritzen des Fensterrandes (13) mit einer elastischen, festhaftenden Schicht (14) aus Gummi, thermoplastischem oder duroplastischem Werkstoff gebildet wird, wobei diese fließfähige Schicht (14) den Hohlraum (15) zwischen dem Fensterrand (13) und einer Aufnahme (16) des Haltesteges (3) ausfüllt.

3. Feststehende Fensteranordnung nach Anspruch 1, dadurch gekennzeichnet, daß das obere Endstück (11) für den Haltesteg (3) einstückig mit der Dichtung (4) ausgebildet ist und den oberen Endbereich des Haltesteges (3) abdeckt bzw. überragt.

4. Feststehende Fensteranordnung nach Anspruch 1, dadurch gekennzeichnet, daß zum Befestigen der Halteschiene (6) der gleiche Werkstoff verwendet wird wie zur Herstellung der Dichtung (4).

5. Feststehende Fensteranordnung nach Anspruch 1, dadurch gekennzeichnet, daß die Außenseiten (21, 22) des Haltesteges (3) mit einer dünnen Bezugsschicht (23) versehen sind.

6. Feststehende Fensteranordnung nach Anspruch 5, dadurch gekennzeichnet, daß die Bezugsschicht (23) einstückig mit der Dichtung (4) ausgebildet ist und daß Bezugsschicht (23) und Dichtung (4) aus dem gleichen Werkstoff gefertigt sind.

## Claims

1. A fixed window arrangement on a motor vehicle door (2), in particular a triangular window (7) which is joined to an upright holding stay (3), with a seal (4) inserted therebetween, wherein a holding rail (6) is also arranged on the lower border region (5) of the window (2), characterised in that the window (2), the holding rail (6), the seal (4), the holding stay (3) and an upper end piece (11) for the holding stay (3) are prefabricated to form a ready-to-instal unit (12) which is manufactured in one operation.

2. A fixed window arrangement according to Claim 1, characterised in that the seal (4) is formed by spraying round the window border (13) with a resilient adhesive layer (14) of rubber, thermoplastic or thermosetting material, this flowable layer (14) filling up the cavity (15) between the window border (13) and a mounting (16) of the holding stay (3).

3. A fixed window arrangement according to Claim 1, characterised in that the upper end piece (11) for the holding stay (3) is in one piece with the seal (4) and covers, or projects beyond, the upper end region of the holding stay (3).

4. A fixed window arrangement according to Claim 1, characterised in that the same material is used for fastening the holding rail (6) as is used for manufacturing the seal (4).

5. A fixed window arrangement according to Claim 1, characterised in that the outsides (21, 22) of the holding stay (3) are provided with a thin coating layer (23).

6. A fixed window arrangement according to Claim 5, characterised in that the coating layer (23) is in one piece with the seal (4) and that the coating layer (23) and the seal (4) are made of the same material.

## Revendications

1. Structure de vitre fixe sur une portière (2) d'un véhicule automobile, en particulier une vitre triangulaire (7) qui est assemblée, par interposition d'une garniture d'étanchéité (4), avec un montant de fixation (3) s'étendant verticalement, un rail de fixation (6) étant en outre monté sur la zone de bordure inférieure (5) de la vitre (2), caractérisée en ce que la vitre (2), le rail de fixation (6), la garniture d'étanchéité (4), le montant de fixation (3) et un embout supérieur (11) pour le montant (3) sont préfabriqués de manière à constituer un ensemble (12) prêt à être monté, qui est réalisé en une seule opération.

2. Structure de vitre fixe selon la revendication 1, caractérisée en ce que la garniture d'étanchéité (4) est formée par injection, autour du bord (13) de la vitre, d'une couche (14) élastique, adhérente, en caoutchouc, matière thermoplastique ou thermodurcissable, cette couche (14) fluide remplissant la cavité (15) située entre le bord (13) de la vitre et un logement (16) du montant de fixation (3).

3. Structure de vitre fixe selon la revendication 1, caractérisée en ce que l'embout supérieur (11) pour le montant (3) est formé d'une seule pièce avec la garniture d'étanchéité (4) et recouvre ou dépasse de la zone terminale supérieure du montant (3).

4. Structure de vitre fixe selon la revendication 1, caractérisée en ce que pour fixer le rail de fixation (6) on utilise le même matériau que pour la fabrication de la garniture d'étanchéité (4).

5. Structure de vitre fixe selon la revendication 1, caractérisée en ce que les côtés extérieurs (21, 22) du montant (3) sont pourvus d'une mince couche de revêtement (23).

6. Structure de vitre fixe selon la revendication 5, caractérisée en ce que la couche de revêtement (22) est formée d'une seule pièce avec la garniture d'étanchéité (4) et en ce que la couche de revêtement (23) et la garniture d'étanchéité (4) sont réalisées dans le même matériau.

11

A

1

7

2

III

8

6

5

III

4

12

9

3

FIG.1

10

17  11

3

IV  IV

9

FIG.2

10

2

18

6

19

20

FIG.3

B

22  3  16  21

23

14

15

4

23

13

2

FIG.4

B